# FASCICULE DE BREVET EUROPEEN

(11) **EP 4 570 775 B1**
(45) Date de publication et mention de la délivrance du brevet: **13.05.2026**
(21) Numéro de dépôt: 24211308.2
(22) Date de dépôt: 07.11.2024
(51) Int. Cl.: C04B 35/111, C04B 35/447, C04B 35/486, C04B 35/632, C04B 35/634, C04B 35/638, B33Y 10/00, B33Y 70/10, B33Y 80/00

(54) **LIANT POLYMÉRIQUE ET FORMULATION À BASE DE POUDRE DE CÉRAMIQUE ET DE LIANT POLYMÉRIQUE POUR LA FABRICATION DE PIÈCES EN CÉRAMIQUE PAR UN PROCÉDÉ D'IMPRESSION 3D, PROCÉDÉ D'OBTENTION D'UNE TELLE FORMULATION ET PROCÉDÉ D'OBTENTION D'UNE PIÈCE EN CÉRAMIQUE**
POLYMERBINDEMITTEL UND POLYMERBINDEMITTELFORMULIERUNG AUF BASIS VON KERAMIKTEILCHEN ZUR HERSTELLUNG VON KERAMIKTEILEN DURCH EIN 3D-DRUCKVERFAHREN, HERSTELLUNGSVERFAHREN DER FORMULIERUNG UND VERFAHREN ZUM ERHALT EINES KERAMISCHEN OBJEKTS
POLYMER BINDER, CERAMIC POWDER AND POLYMER BINDER FORMULATION FOR MAKING CERAMIC PARTS BY 3D PRINTING PROCESS, METHOD OF MAKING THIS FORMULATION AND METHOD OF OBTAINING A CERAMIC OBJECT

(30) Priorité: 09.11.2023 FR 2312229
(43) Date de publication de la demande: 18.06.2025
(73) Titulaire: CENTRE REG INNOV TRANSF TECHN MAT TRAIT, 08000 Charleville Mézières (FR)
(72) Inventeur: Auzene, Delphine, Warcq (FR); Boudifa, Mohamed, 51100 Reims (FR); Abid, Marwa, Grenoble (FR); Lacrampe, Marie France, Hersin Coupigny (FR); Ordynski, Luc, Douai (FR); Charlon, Sébastien, Palluel (FR)
(74) Mandataire: Rhein, Alain

(56) Documents cités:
- US-A1- 2018 000 987
- US-A1- 2018 162 048
- US-A1- 2021 163 364
- EUROPEAN POWDER METALLURGY ASSOCIATION (EPMA), EUROPEAN POWDER METALLURGY ASSOCIATION (EPMA), 2ND FLOOR, TALBOT HOUSE, MARKET STREET, SHREWSBURY SY1 1LG, UK, 9 October 2016 (2016-10-09), XP040686799

## Description

La présente invention concerne le domaine de la fabrication de pièces en céramique technique, c'est-à-dire en matériaux minéraux non métalliques.

En particulier, l'objet de la présente invention entre dans le domaine de la fabrication de pièces céramiques par impression tridimensionnelle (3D), par extrusion, également dénommée « CIM-like » pour « Ceramic Injection Moulding like », ou « Material Extrusion » selon la définition de la norme ASTM ISO 17296-2.

Plus particulièrement, la présente invention est relative à une nouvelle formulation ou composition comportant, notamment, en tant que matériau céramique, de la zircone, ou dioxyde de zirconium ZrO₂, de préférence stabilisée à l'oxyde d'yttrium (également dénommée zircone yttriée ou YSZ pour Yttria-Stabilized Zirconia), ainsi qu'un liant polymérique constitué par des polymères au moins partiellement biosourcés, à savoir le polyéthylène glycol, ou PEG, d'une part, et le poly(butylène succinate-co-adipate), ou PBSA, ou le PBS (poly(butylène succinate)), d'autre part.

Cette formulation est utilisée plus spécifiquement sous la forme de granulés pouvant être extrudés ultérieurement pour la fabrication de pièces diverses en céramique par impression tridimensionnelle (3D).

Les pièces finales en céramique, fabriquées à partir de la formulation de l'invention, par impression 3D peuvent notamment présenter des applications dans des domaines variés tels que l'industrie médicale ou de la santé, ou bien encore dans l'industrie chimique.

Ainsi, par exemple, il est envisageable, au moyen de la formulation selon la présente invention, de fabriquer des pièces tels que des filtres pour des applications dans la chimie, des substituts osseux ou des structures scaffold dans le domaine médical.

Toutefois, les applications mentionnées ci-dessus ne doivent en aucun cas être considérées comme étant limitatives.

Dans l'état de la technique, on connait d'ores et déjà des compositions pour de l'impression tridimensionnelles de pièces en céramique, ainsi que des procédés de fabrication de telles pièces.

Ainsi, de manière traditionnelle, l'impression 3D de pièces en céramique est effectuée à partir de granulés composés d'un mélange polymère plastique - céramique, constituant la matière première, ou le « feedstock », et dont la composition est adaptée à l'impression 3D.

Celle-ci est effectuée au moyen d'une machine, consistant en une imprimante 3D, équipée d'un moyen d'extrusion des granulés, pour une fabrication additive d'un objet solide, couche par couche, sur la base d'un modèle numérique.

Après l'étape d'extrusion, et afin d'obtenir une pièce intégralement en céramique, il est procédé à une étape de déliantage, dont l'objectif est l'élimination totale du liant polymère plastique, afin de faciliter l'étape suivante de densification. La pièce obtenue après déliantage est fragile et poreuse sans changement dimensionnel du fait de la perte du liant.

Enfin, un frittage en phase solide à température élevée est effectué, pour une densification et une consolidation de la pièce en céramique.

L'étape de déliantage peut être effectuée de différentes manières, et est particulièrement délicate car elle peut être source d'endommagements dans la structure de la pièce finalement obtenue.

En particulier, une élimination incomplète, ou mal maîtrisée, du liant polymère est susceptible d'aboutir à des défauts de types fissures, ou bien à une pollution chimique de la pièce finale par la présence de résidus carbonés issus du liant et qui n'ont pas été correctement éliminés.

Un déliantage efficace et optimal doit permettre d'empêcher une déformation, un effritement, un gonflement, ou encore une rupture, de la pièce finale en céramique obtenue par impression 3D.

Ainsi, les principales techniques de déliantage qui peuvent être mises en œuvre dans la fabrication de pièces en céramique sont :
- un déliantage thermique, par l'application d'une température maîtrisée ;
- un déliantage chimique, ou catalytique, par mise au contact de la pièce, suivant son impression, avec un solvant.

La mise en œuvre d'un déliantage thermique présente l'inconvénient principal d'être particulièrement long et énergivore.

En ce qui concerne le déliantage chimique, il nécessite également la mise en contact pendant une durée relativement longue entre la pièce et le solvant, et il n'est généralement pas suffisant pour une élimination satisfaisante et complète du liant polymère.

Par conséquent, un déliantage chimique doit, quasiment systématiquement, être suivi par un déliantage thermique dont l'inconvénient majeur a été évoqué ci-dessus.

En outre, la mise en œuvre de déliantages chimiques est néfaste pour l'environnement et la sécurité des personnes, du fait de l'utilisation de solvants chimiques susceptibles, par exemple, de produire des vapeurs toxiques.

C'est notamment le cas de la demande américaine publiée sous le numéro US 2018/162048, dans laquelle sont décrites des compositions et des procédés avec des systèmes poudre/liant, dans lesquels un liant primaire est associé avec un liant secondaire, ledit liant primaire comprenant un polymère de poids moléculaire élevé pouvant être décomposé chimiquement par exposition à un solvant, tandis que le liant secondaire est insoluble dans ce solvant.

Le solvant en question peut consister en un hydrocarbure aliphatique, de l'acétate d'éthyle, de l'acétone, de la méthyléthylcétone, du trans-dichloroéthylène, du benzène ou du toluène. Il peut également comprendre de l'eau, du 1,4-dioxane, du diméthylformamide, ou de la cyclohexanone.

Les compositions actuellement connues et utilisées en tant que liant polymère dans la fabrication de pièces en céramique par impression 3D présentent ainsi le désavantage de nécessiter plusieurs étapes de déliantage successives.

Il est à noter, également, que certaines formulations, comportant à base céramique et d'un liant polymère plastique sont particulièrement difficiles à imprimer, le mélange étant soit très visqueux soit, au contraire, extrêmement fluide.

Ainsi, on connait par exemple, dans l'état de la technique, du document de brevet US 10376956, un mélange extrudable contenant un métal ou une poudre céramique, avec un liant thermoplastique, celui-ci consistant en de l'acide polylactique (PLA).

On connait également, de la publication au nom de Checot-Moinard D., et al., (Powder injection moulding PIM of feedstock based on hydrosoluble binder and submicronic powder to manufacture parts having micro-details, Powder technology, 25 Mars 2011, Vol.208, pages 472-479), un liant polymérique à base de PEG 4000 et de PP.

Toutefois, la mise en œuvre de ces liants nécessite plusieurs étapes de déliantage, à savoir un déliantage à l'eau à 50°C pendant 24h, et un déliantage thermique. Lors du déliantage à l'eau, celle-ci est polluée avec les résidus polymères et ne peut être rejetée sans un traitement supplémentaire, car la DCO (Demande Chimique en Oxygène) est trop importante.

De la publication intitulée MIM of nitrogen-Strengthened austetinic stainless steel using biopolymer-based binder, WorldPM 2016 - MIM Iron and Steel, 2016, XP040686799, on connait également un procédé de moulage par injection de poudre, dans lequel le liant pour des poudres d'acier contient 45 % en poids de PHBV, 45 % en poids de PEG 4000 et 10 % en poids d'acide stéarique.

Là encore, un déliantage à l'eau est effectué, avant un déliantage thermique.

Le brevet européen EP 0 413 231 décrit un procédé de fabrication d'un pièce frittée inorganique, par formage d'un mélange d'une poudre inorganique frittable, notamment céramique, et de polyoxyméthylène (POM) servant de liant, par moulage par injection ou extrusion, en un corps vert, élimination du liant et frittage.

Dans ce procédé, on élimine le POM par traitement du corps vert dans une atmosphère contenant un acide gazeux, comme de l'acide nitrique, ou du trifluorure de bore gazeux.

On connait encore, du brevet européen EP 2 686 286, un procédé de fabrication d'un corps moulé métallique ou céramique à partir d'une matière thermoplastique, contenant :
A) 40 à 65 % en volume d'au moins une poudre frittable inorganique A,
B) 35 à 60 % en volume d'un mélange de :
   B1) 50 à 95 % en poids d'un ou de plusieurs homo-ou copolymères de polyoxyméthylène (POM) ;
   B2) 5 à 50 % en poids d'un polymère (choisi parmi polyoléfines, polyuréthanes aliphatiques, polyépoxydes aliphatiques non réticulés, polyéthers, polyamides aliphatiques et polyacrylates) dissous de manière homogène ou dispersé dans B1), et
C) 0 à 5 % en volume d'un adjuvant de dispersion.

Dans ce procédé, pour l'élimination du liant, la pièce moulée est traitée avec un solvant qui extrait le composant liant B2) de la pièce moulée et dans lequel le composant liant B1) est insoluble, puis le solvant est éliminé par séchage de la pièce moulée.

Enfin, la pièce moulée est traitée dans une atmosphère contenant un acide, notamment de l'acide nitrique, qui élimine le composant liant B1 du corps moulé.

Toutefois, la mise en œuvre de ces procédés nécessite une enceinte particulière pour délianter ces produits, avec de l'acide nitrique fumant hautement dangereux, et des fours qui produisent du formaldéhyde en produit de réaction.

La demande de brevet américain US 2021/163364 décrit également un procédé de fabrication d'une céramique par impression 3D, dans lequel des granules contenant de la zircone et des liants organiques sont imprimés et frittés.

Le premier liant mis en œuvre dans ce procédé est le POM, déjà évoqué ci-dessus, avec les inconvénients que l'utilisation de ce liant implique, tandis qu'un second liant peut être choisi parmi les matériaux polymères thermodurcissables, tels que la résine phénolique, la résine urée-formaldéhyde, la résine mélamine, la résine polyester insaturée, la résine époxy, la résine de silicone organique et polyuréthane, et/ou les matériaux polymères thermoplastiques.

La présente invention se veut à même de remédier, au moins en partie, aux inconvénients des formulations de l'état de la technique.

Dans une démarche inventive, il a été imaginé la mise au point d'un nouveau liant polymérique, et d'une nouvelle composition comprenant une poudre de céramique et ledit liant polymérique, pour de l'impression 3D de pièces en céramique, notamment à base de zircone, de préférence de zircone yttriée, le liant polymérique et la composition à base de celui-ci permettant, à la fois, une qualité d'impression optimale d'un élément composite en céramique et polymère, tout en simplifiant l'étape de déliantage ultérieure pour l'obtention d'une pièce finale exclusivement en céramique.

A cet effet, l'invention concerne un liant polymérique pour de l'impression tridimensionnelle par extrusion d'un élément composite à base d'un composé céramique et dudit liant polymérique, ce dernier étant constitué de :
- PEG (polyéthylène glycol) 4000 g/mol dans une proportion comprise entre 25 et 50 % (m/m) ;
- PEG (polyéthylène glycol) 10000 g/mol dans une proportion comprise entre 0 et 25 % (m/m) ;
- un polymère de structure biosourcé choisi parmi le PBSA (poly(butylène succinate co-adipate) et le PBS (poly(butylène succinate)), ledit polymère de structure étant dans une proportion comprise entre 30 et 50 % (m/m).

Tout préférentiellement, le liant polymérique est constitué de PEG (polyéthylène glycol) 4 000 g/mol dans une proportion comprise entre 25 et 30 % (m/m), de PEG (polyéthylène glycol) 10 000 g/mol dans une proportion comprise entre 20 et 25 % (m/m) et d'un polymère de structure biosourcé choisi parmi le PBSA et le PBS dans une proportion égale à 50 % (m/m).

Selon un exemple de réalisation préférentiel, ledit liant est constitué de :
- PEG 4 000 g/mol dans une proportion égale à 25 % (m/m) ;
- PEG 10 000 g/mol dans une proportion égale à 25 % (m/m) ;
- un polymère de structure biosourcé choisi parmi le PBSA et le PBS dans une proportion égale à 50 % (m/m).

Tout préférentiellement, ledit polymère de structure est du PBSA.

La présente invention est également relative à une formulation composite, pour de l'impression tridimensionnelle d'un élément composite par extrusion, la formulation comprenant :
- De la poudre d'un composé céramique choisi parmi la zircone (ZrO₂), la zircone yttriée (YSZ), l'oxyde d'aluminium (Al₂O₃), l'hydroxyapatite (HAP Ca₅(PO₄)₃(OH)), le tricalcium phosphate (TCP) dans une proportion comprise entre 74 et 85 % (m/m) ;
- Ledit liant polymérique constitué de PEG 4000, de PEG 10000 et d'un polymère de structure biosourcé choisi parmi le PBSA et le PBS, dans une proportion comprise entre 14 et 25 % (m/m) ;
- De la poudre d'acide stéarique dans une proportion comprise entre 0,2 et 1 % (m/m).

Avantageusement, la formulation composite est constituée de :
- Poudre de zircone (ZrO₂) ou de zircone yttriée (YSZ) dans une proportion environ égale ou égale à 80 % (m/m) ;
- Liant polymérique, constitué à 25 % de PEG 4000, à 25 % de PEG 10000 et à 50 % de PBSA ou de PBS, dans une proportion environ égale ou égale à 19,6 % (m/m) ;
- Poudre d'acide stéarique dans une proportion environ égale ou égale à 0,4 % (m/m).

L'invention concerne encore un procédé de préparation d'une telle formulation composite, et d'obtention de granulés composites à partir de cette formulation, ledit procédé comportant, au moins, les étapes suivantes prises dans l'ordre :
- Dissolution de l'acide stéarique dans un volume V1 d'éther diéthylique sous agitation pour obtenir une solution d'acide stéarique dissout d'un volume V1' ;
- Ajout, à ladite solution d'acide stéarique, de poudre de céramique et d'un volume V2 d'éther diéthylique, sous agitation, en sorte que le volume total de liquide, égal à V1'+V2, soit supérieur au volume de poudre ;
- Evaporation de l'éther à température ambiante sous hotte pour obtenir des particules de poudre céramique enrobées d'acide stéarique ;
- Mélange des particules de poudre céramique enrobées et du liant polymérique, par voie sèche dans un mélangeur puis ensemble par voie fondue à une température de l'ordre de, ou égale à, 110 °C, dans une extrudeuse bi-vis, et obtention de la formulation composite ;
- Extrusion de filaments à partir de ladite formulation composite et broyage desdits filaments pour l'obtention de granulés composites.

La présente invention a également pour objet des granulés composites obtenus à base de la formulation composite et susceptibles d'être obtenus selon le procédé décrit précédemment, lesdits granulés comprenant :
- De la poudre d'un composé céramique choisi parmi la zircone (ZrO₂), la zircone yttriée (YSZ), l'oxyde d'aluminium (Al₂O₃), l'hydroxyapatite (HAP Ca₅(PO₄)₃(OH)), le tricalcium phosphate (TCP) dans une proportion comprise entre 74 et 85 % (m/m) ;
- Le liant polymérique constitué de PEG 4000, de PEG 10000 et de PBSA ou de PBS dans une proportion comprise entre 14 et 25 % (m/m) ;
- De la poudre d"acide stéarique dans une proportion comprise entre 0,2 et 1 % (m/m).

Tout préférentiellement, les granulés composites présentent la composition suivante :
- Poudre de zircone (ZrO₂) ou de zircone yttriée (YSZ) dans une proportion environ égale ou égale à 80 % (m/m) ;
- **Liant** polymérique, constitué à 25 % de PEG 4000, à 25 % de PEG 10000 et à 50 % de PBSA ou de PBS, dans une proportion environ égale ou égale à 19,6 % (m/m) ;
- Poudre d'acide stéarique dans une proportion environ égale ou égale à 0,4 % (m/m).

L'invention est également relative à un procédé de fabrication d'une pièce en céramique à partir de granulés composites, ledit procédé comportant les étapes suivantes :
- Impression tridimensionnelle d'une pièce composite à partir de granulés composites ;
- Application d'un déliantage thermique à la pièce composite obtenue à l'étape précédente, le déliantage thermique étant effectué par paliers de températures selon le programme suivant :
   ∘ A partir d'une température initiale de 25 °C, augmentation de la température à laquelle est soumise ladite pièce composite jusqu'à un premier palier de température de 140 °C à une vitesse de chauffage de 2 °C /min ;
   ∘ A partir de ce premier palier de température, augmentation de la température jusqu'à un deuxième palier de température de 170 °C à une vitesse de chauffage de 0,1 °C/min ;
   ∘ A partir de ce deuxième palier de température, augmentation de la température jusqu'à un troisième palier de température de 200 °C à une vitesse de chauffage de 1 °C/min ;
   ∘ A partir de ce troisième palier de température, augmentation de la température jusqu'à une température finale de 380 °C à une vitesse de chauffage de 0,4 °C/min ;
- Frittage à une température comprise entre 1450 et 1500 °C pour consolidation et obtention de la pièce finale en céramique.

Enfin, la présente invention a pour objet une pièce en céramique fabriquée par impression tridimensionnelle à partir de granulés composites.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description et de l'intérêt de l'invention sera facilitée en se référant aux dessins joints en annexe et dans lesquels :

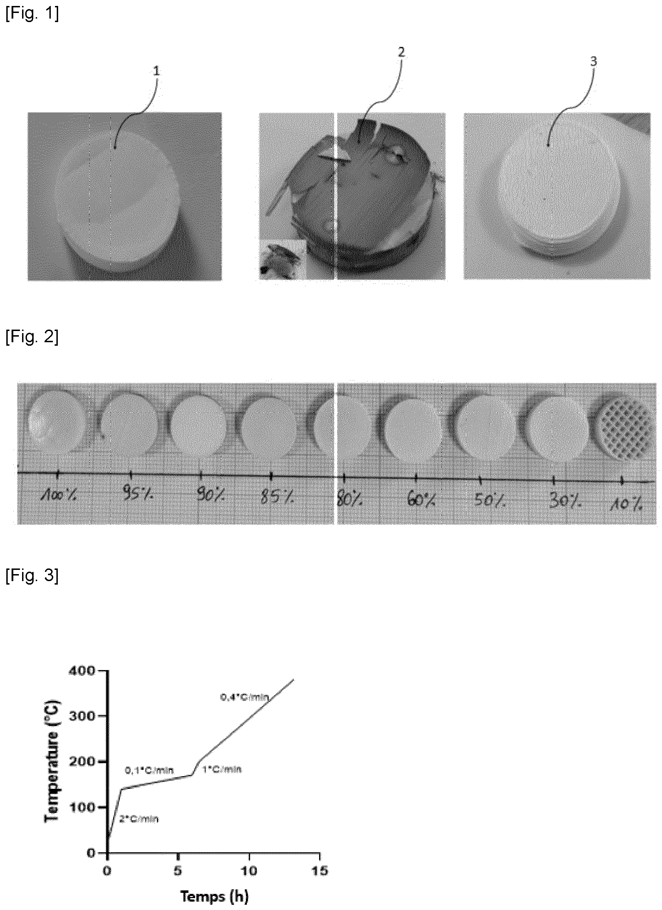

[Fig.1] représente trois photographies de trois pièces déliantées thermiquement, la pièce de la photographie de gauche sur la figure ayant été obtenue par impression 3D à partir de granulés à base de zircone yttriée et d'un exemple particulier d'une composition de liant polymérique conforme à l'invention, tandis que les photographies de gauche illustrent deux pièces, également obtenues par impression 3D avec des liants polymériques différents.
[Fig.2] représente des pièces céramiques en zircone yttriée une fois l'étape de frittage terminé, à différents taux de remplissage, entre 10 et 100 % de remplissage, après mise en œuvre du procédé de fabrication de l'invention, et en particulier du programme de déliantage thermique spécifique au procédé, et à partir de granulés composites fabriqués au moyen d'un exemple de réalisation de la formulation de l'invention.
[FIG.3] correspond à un graphique illustrant les différents paliers de température mis en œuvre dans le cycle de déliantage thermique du procédé de fabrication d'une pièce céramique de l'invention.

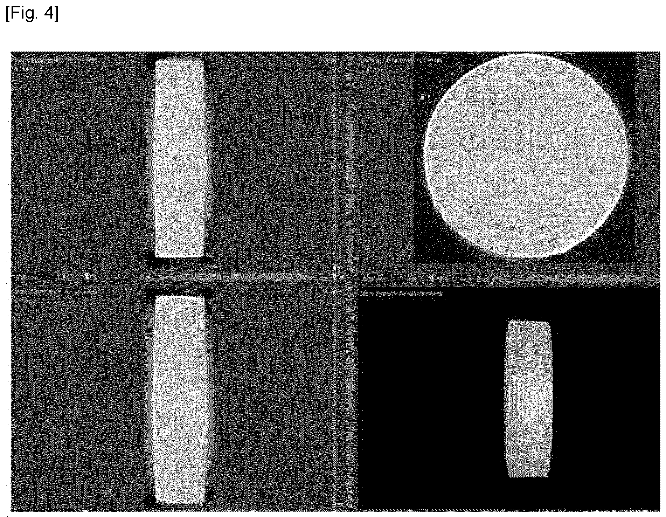

[FIG.4] correspond à une tomographie d'une pièce en céramique après déliantage, obtenue après mise en œuvre du procédé de fabrication de l'invention, et à partir de granulés composites fabriqués au moyen d'un exemple de réalisation de la formulation de l'invention.

Selon un premier aspect, la présente invention est relative à un liant polymérique destiné à être utilisé dans des techniques d'impression 3D de pièces en céramique par extrusion.

Plus particulièrement, le liant polymérique selon l'invention est destiné à être mélangé au moins à un composé céramique, en particulier, mais non limitativement de la zircone, autrement dit de l'oxyde de zirconium ZrO₂, ou de la zircone yttriée, afin d'obtenir une composition, dénommée, dans la suite de la présente description, formulation composite, qui sera ensuite utilisée pour l'obtention de granulés composites.

Par conséquent, selon un deuxième aspect de l'invention, celle-ci est également relative à une formulation composite, pour de l'impression tridimensionnelle d'un élément composite par extrusion, cette formulation comprenant au moins un composé céramique et ledit liant polymérique.

Également, selon un troisième aspect de l'invention, celle-ci est relative à un procédé de préparation d'une formulation composite et d'obtention de granulés composites à partir de cette formulation.

Un quatrième aspect de l'invention concerne alors des granulés composites obtenus à partir de la formulation composite et susceptibles d'être obtenus selon le procédé de préparation.

A partir des granulés composites obtenus au moyen de ladite formulation sera fabriqué, dans un premier temps, par mise en œuvre d'une impression 3D par extrusion, un élément composite constitué du liant polymérique de l'invention et de la céramique.

Suite à la mise en œuvre, sur cet élément composite, d'une étape de déliantage thermique, suivie d'une étape de frittage, une pièce constituée exclusivement de céramique pourra, finalement, être obtenue.

Ainsi, un cinquième aspect de la présente invention est relatif à un procédé de fabrication d'une telle pièce en céramique à partir des granulés composites, dans laquelle uniquement un déliantage thermique est mis en œuvre, plus particulièrement un déliantage thermique où la température est augmentée graduellement par paliers, et sans nécessité de procéder à un déliantage chimique.

Enfin, un sixième aspect de l'invention concerne une pièce en céramique fabriquée par impression tridimensionnelle à partir de ces granulés composites.

En ce qui concerne le liant polymérique selon l'invention, destiné à être mis en œuvre dans un procédé d'impression tridimensionnelle par extrusion d'un élément composite à base d'un composé céramique et dudit liant polymérique, celui-ci est, de manière essentielle, constitué, en pourcentage massique (m/m) considérant la masse totale de liant, de :
- PEG (polyéthylène glycol) 4000 g/mol dans une proportion comprise entre 25 et 50 % (m/m), de préférence entre 25 et 30 % en masse ;
- PEG (polyéthylène glycol) 10000 g/mol dans une proportion comprise entre 0 et 25 % (m/m), de préférence entre 20 et 25 % en masse ;
- un polymère de structure choisi parmi le PBSA (poly(butylène succinate co-adipate) et le PBS (poly(butylène succinate)), ledit polymère de structure étant dans une proportion comprise entre 30 et 50 % (m/m), de préférence entre 45 et 50% en masse.

La somme des constituants du liant polymérique (PEG 4000, PEG 10000 et polymère de structure) est de 100 % en masse.

Tout préférentiellement, les polymères utilisés en mélange pour l'obtention du liant polymérique de l'invention, à savoir le PEG 4000, le PEG 10000 et, préférentiellement, le PBSA ou le PBS, consistent en des polymères au moins partiellement biosourcés.

De manière avantageuse, dans ledit liant polymérique de l'invention, le PBSA constitue le polymère de structure. Il est, de manière particulièrement avantageuse, au moins partiellement biosourcé et ne présente aucune toxicité.

La température de fusion du PBSA est de 90 °C.

La présence de ce constituant dans le liant polymérique de l'invention, lorsque celui-ci est mélangé à de la poudre de zircone, en particulier de la poudre de zircone yttriée, par exemple, pour l'obtention d'une formulation composite, permet de faire en sorte que cette formulation soit imprimable, par les techniques d'impression 3D, à une température relativement basse, à savoir comprise entre 100 et 110 °C, en comparaison avec les formulations traditionnellement utilisées qui nécessitent des températures supérieures, plus spécifiquement aux alentours de 170 °C.

En conséquence, la présence de PBSA dans de telles proportions dans le liant polymérique de l'invention permet un gain d'énergie lors de l'étape d'impression 3D, et la mise en œuvre de celle-ci se trouve, également, facilitée.

Dans un autre exemple de réalisation du liant polymérique, tout aussi avantageux, le polymère de structure est le PBS.

Celui-ci présente une température de fusion de l'ordre de 112 à 116 °C, en sorte qu'il permet également la réalisation de l'extrusion et de l'impression à des températures relativement basses, avec, par conséquent, les mêmes avantages que ceux conférés par le PBSA.

Le second polymère constitutif dudit liant polymérique, le PEG, présente l'avantage d'être écologique et non toxique à l'utilisation.

La présence de ce polymère permet une fluidité de la formulation composite, obtenue en mélangeant le liant polymérique et une poudre céramique, en fonction de sa masse molaire.

Ainsi, le PEG permet de faciliter l'impression 3D, en baissant la viscosité du feedstock, à savoir les granulés obtenus à partir de la formulation composite contenant le liant polymérique.

Selon un exemple de réalisation tout préférentiel, le liant polymérique de l'invention est constitué de :
- PEG (polyéthylène glycol) 4 000 g/mol dans une proportion égale à 25 % (m/m) ;
- PEG (polyéthylène glycol) 4 000 g/mol dans une proportion égale à 25 % (m/m) ;
- PBSA (poly(butylène succinate co-adipate) ou PBS (poly(butylène succinate)) dans une proportion égale à 50 % (m/m).

Une telle formulation de liant polymérique permet en effet une impression facilitée, et la réalisation d'un déliantage thermique uniquement, pour la fabrication de pièces composites, comme cela sera illustré dans l'exemple détaillé dans la suite de la description, en lien avec les figures.

En ce qui concerne à présent le deuxième aspect de l'invention, à savoir la formulation composite, pour de l'impression tridimensionnelle d'un élément composite par extrusion, celle-ci comprend, au moins, un composé céramique, un liant polymérique et de l'acide stéarique, dans les proportions suivantes, exprimées en masse par rapport à la masse totale de la formulation (m/m) :
- entre 74 et 85 % d'une poudre d'un composé céramique choisi parmi la zircone (ZrO₂), la zircone yttriée (YSZ), l'oxyde d'aluminium Al₂O₃, l'hydroxyapatite (HAP Ca₅(PO₄)₃(OH)), le tricalcium phosphate (TCP) ;
- entre 14 et 25 % de liant polymérique tel que défini précédemment dans la description ;
- entre 0,2 et 1 % de poudre d'acide stéarique.

La somme des constituants de la formulation composite (composé céramique, liant polymérique et acide stéarique) est de 100 % en masse.

Tout préférentiellement, ladite formulation composite est constituée de :
- poudre de zircone (ZrO₂) ou poudre de zircone yttriée (YSZ) dans une proportion égale à 80 % (m/m) ;
- liant polymérique, constitué de PEG 4000, de PEG 10000 et de PBSA ou de PBS, dans une proportion égale à 19,6 % (m/m) ;
- poudre d'acide stéarique dans une proportion égale à 0,4 % (m/m).

Le liant polymérique mis en œuvre dans cette formulation est préférentiellement constitué de 25 % de PEG 4000, de 25 % de PEG 10 000 et de 50 % de PBSA ou de PBS.

La zircone est préférentiellement de la zircone yttriée.

A partir de cette formulation composite, selon un troisième aspect de l'invention, il est envisageable de fabriquer des granulés composites, ou feedstock, en mettant en œuvre un procédé de préparation de la formulation composite, et d'obtention de granulés composites à partir de cette formulation, ledit procédé comprenant au moins, les étapes suivantes :
- Dissolution de l'acide, initialement sous forme de poudre, dans un volume V1 d'éther diéthylique sous agitation magnétique jusqu'à dissolution de l'acide stéarique et obtention d'une solution d'acide stéarique d'un volume V1' ;
- Ajout, à ladite solution diluée d'acide stéarique, de poudre de céramique et d'un volume V2 d'éther diéthylique, sous agitation vigoureuse, en sorte que le volume total de liquide, égal à V1' (solution d'acide stéarique dissout) +V2 (volume supplémentaire d'éther di-éthylique), soit supérieur au volume de poudre ; ainsi, l'ensemble des particules de poudre de céramique sont enrobées par de l'acide stéarique, ce qui permettra ultérieurement une dispersion optimale de la charge céramique dans la matrice polymère ;
- Evaporation de l'éther à température ambiante (entre 20 et 25 °C) sous hotte pour obtenir des particules de poudre céramique enrobées d'acide stéarique ; cette étape d'évaporation peut typiquement être mise en œuvre pendant une durée de l'ordre de, ou égale à, 24 h.
- Mélange des particules de poudre céramique enrobées d'acide stéarique et du liant polymérique, dans les proportions adéquates, par voie sèche dans un mélangeur puis ensemble par voie fondue à une température de l'ordre de, ou égale à, 110 °C, dans une extrudeuse bi-vis, et obtention de la formulation composite ; cette étape permet un mélange de la charge céramique, déjà enrobée d'acide stéarique, avec le liant polymérique, afin d'obtenir finalement un mélange parfaitement homogène ;
- Extrusion de filaments à partir de ladite formulation composite et broyage desdits filaments pour l'obtention de granulés composites.

Ainsi, dans un exemple de réalisation préférentiel de ce procédé, pour obtenir une masse égale à 1 kg de matière première (granulés), on utilise 4 g d'acide stéarique, (0,4 % en masse), dilué préférentiellement dans un volume V1 de l'ordre de 150 mL d'éther di-éthylique, 800 g de poudre de zircone ZrO₂ yttriée (80 % en masse), 98 g de PBSA ou de PBS (9,8 % en masse), 49 g de PEG 4000 (4,9 % en masse) et 49 g de PEG 10 000 (4,9 % en masse).

Selon un quatrième aspect de l'invention, celle-ci concerne, par conséquent, également, des granulés composites obtenus au moyen de la formulation composite qui a été définie précédemment dans la description, lesdits granulés étant de plus susceptibles d'être obtenus selon le procédé susmentionné.

En particulier, de tels granulés composites présentent dans leur composition, les constituants suivants, dans les proportions indiquées :
- de la poudre d'un composé céramique choisi parmi la zircone (ZrO₂), la zircone yttriée (YSZ), l'oxyde d'aluminium Al₂O₃, l'hydroxyapatite HAP, le tricalcium phosphate TCP, dans une proportion comprise entre 74 et 85 % (m/m);
- du liant polymérique constitué de PEG 4000, de PEG 10000 et de PBSA ou de PBS dans une proportion comprise entre 14 et 25 % (m/m) ;
- de la poudre d'acide stéarique dans une proportion comprise entre 0,2 et 1 % (m/m).

Là encore, de manière avantageuse, en tenant compte de l'exemple de réalisation préférentiel de l'invention, les granulés composites sont constitués de :
- poudre de zircone yttriée (YSZ) dans une proportion égale à 80 % (m/m) ;
- liant polymérique constitué de PEG 4000, de PEG 10000 et de PBSA ou de PBS dans une proportion égale à 19,6 % (m/m) ; préférentiellement, la composition du liant polymérique permettant d'aboutir à la fabrication des granulés, et donc entrant dans la composition de ces derniers, est : 25 % de PEG 4000, 25 % de PEG 10 000 et 50 % de PBSA ou de PBS.
- poudre d'acide stéarique dans une proportion égale à 0,4 % (m/m).

De tels granulés composites pourront ensuite être utilisés pour une impression tridimensionnelle d'une pièce en céramique, au moyen d'une imprimante 3D adaptée pour utiliser de tels granulés, comme par exemple, sans que cela soit limitatif, l'imprimante « Freeformer^{®} » (marque déposée) de chez « Arburg^{®} » (marque déposée) ou l'extrudeur à granulés proposé par Mahor.

L'invention est, par conséquent, selon un cinquième aspect, également relative à un procédé de fabrication d'une pièce en céramique à partir des granulés composites définis ci-dessus.

Le procédé de fabrication d'une pièce en céramique à partir des granulés composites comporte les étapes suivantes, prises dans l'ordre :
- Impression tridimensionnelle d'une pièce composite par extrusion à partir de granulés composites susmentionnés ;
- Application d'un déliantage thermique à la pièce composite obtenue à l'étape précédente, le déliantage thermique étant effectué par paliers de températures selon le programme suivant :
   ∘ A partir d'une température initiale de 25 °C, augmentation de la température à laquelle est soumise ladite pièce composite jusqu'à un premier palier de température de 140 °C à une vitesse de chauffage de 2 °C /min ;
   ∘ A partir de ce premier palier de température, augmentation de la température jusqu'à un deuxième palier de température de 170 °C à une vitesse de chauffage de 0,1 °C/min ;
   ∘ A partir de ce deuxième palier de température, augmentation de la température jusqu'à un troisième palier de température de 200 °C à une vitesse de chauffage de 1 °C/min ;
   ∘ A partir de ce troisième palier de température, augmentation de la température jusqu'à une température finale de 380 °C à une vitesse de chauffage de 0,4 °C/min ;
- Frittage à une température comprise entre 1450 et 1500 °C pendant 2 heures pour consolidation et obtention de la pièce finale en céramique.

Selon une particularité de ce procédé de fabrication de pièces en céramique, uniquement un déliantage thermique est mis en œuvre. En d'autres termes, grâce à la formulation du liant polymérique entrant dans la composition des granulés composites, il n'est pas nécessaire de mettre en œuvre un déliantage chimique.

L'étape de déliantage mise en œuvre ici, avec les paramètres de température et les vitesses de chauffage préconisées, permet une élimination du liant polymérique par décomposition, en chauffant la pièce composite jusqu'à la température de dégradation du liant.

Finalement, l'étape de frittage, effectuée dans un four, permet de consolider les particules de céramique, notamment de zircone ZrO₂ ou de zircone yttriée.

La présence, dans la matrice polymérique, en plus du polymère de structure biosourcé, d'un second polymère, à savoir le PEG, plus fluide que ledit polymère de structure, permet de faciliter l'impression tridimensionnelle en baissant la viscosité des granulés composites.

La formulation présente en effet, du fait des polymères qu'elle comporte dans les proportions qui ont été définies, une viscosité optimisée, supérieure à 9 Pa.s (pour un taux de cisaillement de 10⁵ s⁻¹ au travers de la buse de l'imprimante), ce qui lui permet d'être imprimable sans être dégradée au cours de son extrusion et de l'impression.

L'étape de déliantage thermique est également facilitée, du fait, en particulier, de la présence de petites chaines provenant du PEG 4 000 de faible masse moléculaire.

En outre, l'extrusion et l'impression tridimensionnelle sont réalisées à des températures de l'ordre de 100 à 110 °C, inférieures à ce qui est traditionnellement mis en œuvre (entre 170 et 200 °C), grâce à la présence de ces polymères, notamment le PBSA ou le PBS, permettant ainsi de faciliter la mise en œuvre de la formulation, de limiter la consommation d'énergie et, par conséquent, de réduire les coûts.

L'invention est également relative à une pièce en céramique fabriquée par impression tridimensionnelle à partir des granulés composites tels que définis ci-dessus dans leur composition.

L'invention sera à présent illustrée au travers d'un exemple de réalisation de pièces déliantées thermiquement, obtenues à partir d'une formulation présentant la composition telle que définie dans la présente invention, ou de formulations présentant des compositions différentes.

### Exemple : Fabrication de pièces céramiques à partir de différentes formulations comprenant des polymères

La formulation composite conforme à la présente invention qui a été testée contient 80 % en masse de zircone yttriée, 0,4 % en masse d'acide stéarique, 9,8 % en masse de PBSA, 4,9 % en masse de PEG 4000 et 4,9 % en masse de PEG 10 000.

En comparaison, une deuxième formulation composite a été testée. Elle est similaire à celle de l'invention, à l'exception qu'elle ne contient que du PBSA soit : 80 % en masse de zircone yttriée, 0,4 % d'acide stéarique, et 19,6 % de PBSA.

Également, une troisième formulation composite a été testée : celle-ci contient, en tant que liant polymérique, uniquement du PEG, soit : 80 % en masse de zircone yttriée, 0,4 % d'acide stéarique, 9,8 % de PEG 4000 et 9,8 % de PEG 10 000.

L'élaboration des granulés composites est effectuée comme suit, pour l'obtention d'une masse de 1 kg de granulés :

La première étape se faite par voie solvant afin d'enrober toutes les particules de zircone yttriée par de l'acide stéarique et favoriser la bonne dispersion de la charge dans la matrice polymère.

En effet, l'acide stéarique a été dissout dans l'éther di-éthylique (150 mL d'éther pour 4 g d'acide stéarique) sous agitation magnétique pendant quelques minutes jusqu'à l'obtention d'une solution totalement transparente.

Ensuite, la zircone yttriée a été ajoutée à la solution avec un peu plus d'éther pour recouvrir toutes les particules de zircone toute en gardant l'agitation magnétique.

Finalement le mélange reste sous la hotte à l'ambiante pendant 24 heures afin d'évaporer tout l'éther et obtenir des particules de zircone enrobées par l'acide stéarique.

Le volume d'éther utilisé est légèrement supérieur au volume de zircone. Il est nécessaire que les particules de zircone soient complétement recouvertes dans l'éther pour que l'enrobage soit fait à l'état liquide.

Quant à la deuxième étape, elle se fait dans un mélangeur par voie sèche puis par voie fondue à l'aide d'une extrudeuse bi-vis à une température T égale à 110 °C. Cette étape sert à mélanger la charge déjà enrobée et le liant (PEG 4000, PEG 10000 et PBSA dans le cadre de la composition de l'invention, PBSA seul dans le cas du premier exemple comparatif et, dans le cas du second exemple comparatif, PEG 4000 et PEG 10 000) et avoir finalement un mélange parfaitement homogène.

Les filaments obtenus après extrusion sont broyés pour obtenir des granulés.

Ces granulés ont ensuite été imprimés au moyen d'une imprimante 3D adaptée, à savoir l'imprimante « Freeformer^{®} » (marque déposée) de chez « Arburg^{®} » (marque déposée) pour obtenir, dans un premier temps, des pièces composites.

Afin d'obtenir des pièces intégralement en céramique, les pièces composites imprimées ont subi une étape de déliantage thermique afin de retirer le liant polymérique par décomposition en chauffant jusqu'à la température de dégradation du liant, avant une étape de frittage dans un four pour consolider les particules de zircone yttriée.

Les résultats obtenus au moyen des trois compositions de liant polymériques testées sont illustrés sur la figure 1 des dessins ci-joints.

La figure 2, quant à elle, illustre des pièces finales en céramique, après frittage, obtenues au moyen de la formulation de liant polymérique selon l'invention, à différents taux de remplissage (10 %, 30 %, 50%, 60 %, 80 %, 85 %, 90%, 95 %, et 100 %).

La figure 3 illustre le programme de déliantage thermique par paliers qui a été mis au point et optimisé par le logiciel NETZSCH Kinetics Neo à partir de trois courbes d'ATG (Analyses Thermogravimétriques) des granulés à quatre vitesses de chauffage différentes.

Ce programme de déliantage thermique est également détaillé dans le tableau ci-dessous :

| Paliers | Vitesse de chauffage |
|---|---|
| 25-140°C | 2°C/min |
| 140-170°C | 0,1°C/min |
| 170-200°C | 1°C/min |
| 200-380°C | 0,4°C/min |

Pour en revenir à présent aux photographies des pièces en céramique déliantées thermiquement reprises sur la figure 1 :
- la pièce 1 a été obtenue à partir de la formulation de liant polymérique de l'invention (50 % de PBSA + 25 % de PEG 4000 et 25 % de PEG 10 000) ; cette pièce a été facile à imprimer, et l'étape de déliantage thermique s'est correctement déroulée ; la figure 4 est une tomographie de cette pièce après déliantage, montrant la qualité intrinsèque satisfaisante de celle-ci.
- la pièce 2 a été obtenue avec une formulation de liant polymérique contenant uniquement du PBSA ; elle a été très difficile à imprimer, le liant étant très visqueux, et le déliantage thermique a été également extrêmement difficile. La photographie illustre bien que la qualité de la pièce finale n'est pas optimale.
- la pièce 3 a été obtenue avec une formulation de liant polymérique contenant pour moitié du PEG 4 000 et pour moitié du PEG 10 000 ; l'impression a été réalisée avec difficulté du fait d'une fluidité trop importante du mélange. L'étape de déliantage thermique s'est toutefois déroulée correctement.

La figure 2 permet d'illustrer le fait que la présente formulation de liant polymérique permet d'obtenir des pièces en céramique de qualité satisfaisante, et ce quel que soit le taux de remplissage desdites pièces que l'on cherche à obtenir.

Ces résultats démontrent que l'adjonction de PEG avec le PBSA dans le liant polymérique est particulièrement importante pour la réussite dans l'obtention de pièces céramiques de bonne qualité et pour la mise en œuvre des étapes de préparation de ces pièces, de même que le choix de la masse molaire du PEG.

En effet, les longues chaines provenant du PEG 10 000 vont assurer la bonne processabilité de l'étape de mise en forme par impression car plus la masse molaire des chaines de PEG est grande, plus l'énergie d'activation est grande et donc la sensibilité du polymère à la température devient faible.

En ce qui concerne les petites chaines de polymère provenant du PEG 4 000, celles-ci vont faciliter l'étape de déliantage.

Par conséquent, pour répondre aux exigences du procédé, une proportion 50 :50 entre le PEG 4000 et le PEG 10000, en mélange avec du PBSA, est particulièrement optimale pour permettre une co-extrusion du PEG et du PBSA, et également de faciliter le déliantage thermique, du fait de la vitesse de dégradation de ces polymères.

Cela étant, une augmentation de la proportion de PEG 4000 par rapport à celle de PEG 10 000 est également envisageable, dans les proportions qui sont revendiquées, toujours en mélange avec du PBSA en tant que polymère de structure, dans les proportions indiquées.

A noter ici que la formulation de liant polymérique testée a permis de réaliser le déliantage uniquement thermique des pièces imprimées (sans déliantage chimique) en un temps de 14 heures seulement, permettant un gain de temps, donc de productivité, et un gain d'énergie, en comparaison avec les solutions actuellement mise en œuvre qui nécessitent une durée de déliantage supérieure, à savoir typiquement une durée de 24h.

## Revendications

1. Liant polymérique pour de l'impression tridimensionnelle par extrusion d'un élément composite à base d'un composé céramique et dudit liant polymérique, **caractérisé en ce que** ledit liant est constitué de :
- PEG (polyéthylène glycol) 4000 g/mol dans une proportion comprise entre 25 et 50 % (m/m) ;
- PEG (polyéthylène glycol) 10000 g/mol dans une proportion comprise entre 0 et 25 % (m/m) ;
- un polymère de structure biosourcé choisi parmi le PBSA (poly(butylène succinate co-adipate) et le PBS (poly(butylène succinate)), ledit polymère de structure étant dans une proportion comprise entre 30 et 50 % (m/m).

2. Liant polymérique pour de l'impression tridimensionnelle selon la revendication 1 **caractérisé en ce qu'**il est constitué de :
- PEG (polyéthylène glycol) 4 000 g/mol dans une proportion comprise entre 25 et 30 % (m/m) ;
- PEG (polyéthylène glycol) 10 000 g/mol dans une proportion comprise entre 20 et 25 % (m/m) ;
- un polymère de structure biosourcé choisi parmi le PBSA et le PBS dans une proportion égale à 50 % (m/m).

3. Liant polymérique pour de l'impression tridimensionnelle selon la revendication 1 ou la revendication 2 **caractérisé en ce qu'**il est constitué de :
- PEG (polyéthylène glycol) 4 000 g/mol dans une proportion égale à 25 % (m/m) ;
- PEG (polyéthylène glycol) 10 000 g/mol dans une proportion égale à 25 % (m/m) ;
- un polymère de structure biosourcé choisi parmi le PBSA et le PBS dans une proportion égale à 50 % (m/m).

4. Liant polymérique pour de l'impression tridimensionnelle selon l'une quelconque des revendications 1 à 3 **caractérisé en ce que** ledit polymère de structure est du PBSA.

5. Formulation composite, pour de l'impression tridimensionnelle d'un élément composite par extrusion, **caractérisée en ce qu'**elle comprend au moins un composé céramique, de l'acide stéarique et un liant polymérique selon l'une quelconque des revendications 1 à 4, ladite formulation comprenant :
- De la poudre d'un composé céramique choisi parmi la zircone (ZrO₂), la zircone yttriée (YSZ), l'oxyde d'aluminium (Al₂O₃), l'hydroxyapatite (HAP Ca₅(PO₄)₃(OH)), le tricalcium phosphate (TCP) dans une proportion comprise entre 74 et 85 % (m/m) ;
- Ledit liant polymérique constitué de PEG 4000, de PEG 10000 et d'un polymère de structure biosourcé choisi parmi le PBSA et le PBS, dans une proportion comprise entre 14 et 25 % (m/m) ;
- De la poudre d'acide stéarique dans une proportion comprise entre 0,2 et 1 % (m/m).

6. Formulation composite, pour de l'impression tridimensionnelle d'un élément composite par extrusion, selon la revendication 5, **caractérisée en ce qu'**elle est constituée de :
- Poudre de zircone (ZrO₂) ou de zircone yttriée (YSZ) dans une proportion environ égale ou égale à 80 % (m/m) ;
- Liant polymérique, constitué à 25 % de PEG 4000, à 25 % de PEG 10000 et à 50 % de PBSA ou de PBS, dans une proportion environ égale ou égale à 19,6 % (m/m) ;
- Poudre d'acide stéarique dans une proportion environ égale ou égale à 0,4 % (m/m).

7. Procédé de préparation d'une formulation composite selon l'une quelconque des revendications 5 ou 6, et d'obtention de granulés composites à partir de cette formulation, ledit procédé étant **caractérisé en ce qu'**il comporte, au moins, les étapes suivantes :
- Dissolution de l'acide stéarique dans un volume V1 d'éther diéthylique sous agitation pour obtenir une solution d'acide stéarique dissous d'un volume V1' ;
- Ajout, à ladite solution d'acide stéarique, de poudre de céramique et d'un volume V2 d'éther diéthylique, sous agitation, en sorte que le volume total de liquide, égal à V1'+V2, soit supérieur au volume de poudre ;
- Evaporation de l'éther à température ambiante sous hotte pour obtenir des particules de poudre céramique enrobées d'acide stéarique ;
- Mélange des particules de poudre céramique enrobées et du liant polymérique, par voie sèche dans un mélangeur puis ensemble par voie fondue à une température de l'ordre de, ou égale à, 110 °C, dans une extrudeuse bi-vis, et obtention de la formulation composite ;
- Extrusion de filaments à partir de ladite formulation composite et broyage desdits filaments pour l'obtention de granulés composites.

8. Granulés composites à base de la formulation composite selon la revendication 5 ou la revendication 6, susceptibles d'être obtenus selon le procédé de la revendication précédente et comprenant :
- De la poudre d'un composé céramique choisi parmi la zircone (ZrO2), la zircone yttriée (YSZ), l'oxyde d'aluminium (Al₂O₃), l'hydroxyapatite (HAP Ca₅(PO₄)₃(OH)), le tricalcium phosphate (TCP) dans une proportion comprise entre 74 et 85 % (m/m) ;
- Le liant polymérique constitué de PEG 4000, de PEG 10000 et de PBSA ou de PBS dans une proportion comprise entre 14 et 25 % (m/m) ;
- De la poudre d"acide stéarique dans une proportion comprise entre 0,2 et 1 % (m/m).

9. Granulés composites selon la revendication 8 **caractérisés en ce qu'**ils présentent la composition suivante :
- Poudre de zircone (ZrO₂) ou de zircone yttriée (YSZ) dans une proportion environ égale ou égale à 80 % (m/m) ;
- Liant polymérique, constitué à 25 % de PEG 4000, à 25 % de PEG 10000 et à 50 % de PBSA ou de PBS, dans une proportion environ égale ou égale à 19,6 % (m/m) ;
- Poudre d'acide stéarique dans une proportion environ égale ou égale à 0,4 % (m/m).

10. Procédé de fabrication d'une pièce en céramique à partir de granulés composites selon la revendication 8 ou la revendication 9, **caractérisé en ce qu'**il comporte les étapes suivantes :
- Impression tridimensionnelle d'une pièce composite à partir de granulés composites selon la revendication 8 ou la revendication 9 ;
- Application d'un déliantage thermique à la pièce composite obtenue à l'étape précédente, le déliantage thermique étant effectué par paliers de températures selon le programme suivant :
∘ A partir d'une température initiale de 25 °C, augmentation de la température à laquelle est soumise ladite pièce composite jusqu'à un premier palier de température de 140 °C à une vitesse de chauffage de 2 °C /min ;
∘ A partir de ce premier palier de température, augmentation de la température jusqu'à un deuxième palier de température de 170 °C à une vitesse de chauffage de 0,1 °C/min ;
∘ A partir de ce deuxième palier de température, augmentation de la température jusqu'à un troisième palier de température de 200 °C à une vitesse de chauffage de 1 °C/min ;
∘ A partir de ce troisième palier de température, augmentation de la température jusqu'à une température finale de 380 °C à une vitesse de chauffage de 0,4 °C/min ;
- Frittage à une température comprise entre 1450 et 1500 °C pour consolidation et obtention de la pièce finale en céramique.

## Patentansprüche

1. Polymerbindemittel für den dreidimensionalen Druck eines Verbundelements durch Extrusion auf Basis einer keramischen Verbindung und des Polymerbindemittels, **dadurch gekennzeichnet, dass** das Bindemittel aus Folgendem besteht:
- PEG (Polyethylenglykol) 4000 g/mol mit einem Anteil zwischen 25 und 50 % (m/m);
- PEG (Polyethylenglykol) 10000 g/mol mit einem Anteil zwischen 0 und 25 % (m/m);
- einem biobasierten Strukturpolymer, ausgewählt aus PBSA (Poly(butylensuccinat-co-adipat)) und PBS (Poly(butylensuccinat)), wobei das Strukturpolymer mit einem Anteil zwischen 30 und 50 % (m/m) vorliegt.

2. Polymerbindemittel für den dreidimensionalen Druck nach Anspruch 1 **dadurch gekennzeichnet, dass** es aus Folgendem besteht:
- PEG (Polyethylenglykol) 4000 g/mol mit einem Anteil zwischen 25 und 30 % (m/m);
- PEG (Polyethylenglykol) 10000 g/mol mit einem Anteil zwischen 20 und 25 % (m/m);
- einem biobasierten Strukturpolymer, ausgewählt aus PBSA und PBS mit einem Anteil von 50 % (m/m).

3. Polymerbindemittel für den dreidimensionalen Druck nach Anspruch 1 oder Anspruch 2, **dadurch gekennzeichnet, dass** es aus Folgendem besteht:
- PEG (Polyethylenglykol) 4000 g/mol mit einem Anteil von 25 % (m/m);
- PEG (Polyethylenglykol) 10000 g/mol mit einem Anteil von 25 % (m/m);
- einem biobasierten Strukturpolymer, ausgewählt aus PBSA und PBS mit einem Anteil von 50 % (m/m).

4. Polymerbindemittel für den dreidimensionalen Druck nach einem der Ansprüche 1 bis 3 **dadurch gekennzeichnet, dass** das Strukturpolymer PBSA ist.

5. Verbundformulierung für den dreidimensionalen Druck eines Verbundelements durch Extrusion, **dadurch gekennzeichnet, dass** sie mindestens eine keramische Verbindung, Stearinsäure und ein Polymerbindemittel nach einem der Ansprüche 1 bis 4 umfasst, wobei die Formulierung Folgendes umfasst:
- Pulver einer keramischen Verbindung, ausgewählt aus Zirkonoxid (ZrO₂), yttriumstabilisiertem Zirkonoxid (YSZ), Aluminiumoxid (Al₂O₃), Hydroxylapatit (HAP Ca₅(PO₄)₃(OH)), Tricalciumphosphat (TCP) mit einem Anteil zwischen 74 und 85 % (m/m);
- das Polymerbindemittel, bestehend aus PEG 4000, PEG 10000 und einem biobasierten Strukturpolymer, ausgewählt aus PBSA und PBS, mit einem Anteil zwischen 14 und 25 % (m/m);
- Stearinsäurepulver mit einem Anteil zwischen 0,2 und 1 % (m/m).

6. Verbundformulierung für den dreidimensionalen Druck eines Verbundelements durch Extrusion nach Anspruch 5,
**dadurch gekennzeichnet, dass** sie aus Folgendem besteht:
- Zirkonoxidpulver (ZrO₂) oder yttriumstabilisiertes Zirkonoxid (YSZ) mit einem Anteil von etwa oder von 80 % (m/m);
- Polymerbindemittel, bestehend zu 25 % aus PEG 4000, zu 25 % aus PEG 10000 und zu 50 % aus PBSA oder PBS, mit einem Anteil von etwa oder von 19,6 % (m/m);
- Stearinsäurepulver mit einem Anteil von etwa oder von 0,4 % (m/m).

7. Verfahren zum Herstellen einer Verbundformulierung nach einem der Ansprüche 5 oder 6 und zum Erhalten von Verbundgranulat aus dieser Formulierung, wobei das Verfahren **dadurch gekennzeichnet ist, dass** es mindestens die folgenden Schritte aufweist:
- Auflösen der Stearinsäure in einem Volumen V1 von Diethylether unter Rühren, so dass eine Lösung gelöster Stearinsäure mit einem Volumen V1' erhalten wird;
- Hinzufügen von Keramikpulver und einem Volumen V2 von Diethylether unter Rühren zu der Stearinsäurelösung, so dass das Gesamtvolumen der Flüssigkeit, das gleich V1'+V2 ist, größer ist als das Pulvervolumen;
- Verdampfen des Ethers bei Raumtemperatur unter dem Abzug, so dass keramische Pulverpartikel erhalten werden, die mit Stearinsäure überzogen sind;
- Mischen der überzogenen keramischen Pulverpartikel und des Polymerbindemittels zunächst trocken in einem Mischer und anschließend gemeinsam im geschmolzenen Zustand bei einer Temperatur von etwa oder von 110 °C in einem Doppelschneckenextruder und Erhalten der Verbundformulierung;
- Extrudieren von Filamenten aus der Verbundformulierung und Zerkleinern der Filamente zum Erhalten von Verbundgranulat.

8. Verbundgranulat auf Basis der Verbundformulierung nach Anspruch 5 oder Anspruch 6, das nach dem Verfahren des vorhergehenden Anspruchs erhalten werden kann und Folgendes umfasst:
- Pulver einer keramischen Verbindung, ausgewählt aus Zirkonoxid (ZrO2), yttriumstabilisiertem Zirkonoxid (YSZ), Aluminiumoxid (Al₂O₃), Hydroxylapatit (HAP Ca₅(PO₄)₃(OH)), Tricalciumphosphat (TCP) mit einem Anteil zwischen 74 und 85 % (m/m);
- das Polymerbindemittel, bestehend aus PEG 4000, PEG 10000 und PBSA oder PBS mit einem Anteil zwischen 14 und 25 % (m/m);
- Stearinsäurepulver mit einem Anteil zwischen 0,2 und 1 % (m/m).

9. Verbundgranulat nach Anspruch 8, **dadurch gekennzeichnet, dass** es die folgende Zusammensetzung aufweist:
- Zirkonoxidpulver (ZrO₂) oder yttriumstabilisiertes Zirkonoxid (YSZ) mit einem Anteil von etwa oder von 80 % (m/m);
- Polymerbindemittel, bestehend zu 25 % aus PEG 4000, zu 25 % aus PEG 10000 und zu 50 % aus PBSA oder PBS, mit einem Anteil von etwa oder von 19,6 % (m/m);
- Stearinsäurepulver mit einem Anteil von etwa oder von 0,4 % (m/m).

10. Verfahren zum Herstellen eines Keramikteils aus Verbundgranulat nach Anspruch 8 oder Anspruch 9, **dadurch gekennzeichnet, dass** es die folgenden Schritte aufweist:
dreidimensionales Drucken eines Verbundteils aus Verbundgranulat nach Anspruch 8 oder Anspruch 9;
- Anwenden einer thermischen Entbinderung bei dem in dem vorherigen Schritt erhaltenen Verbundteil, wobei die thermische Entbinderung in Temperaturstufen gemäß dem folgenden Programm durchgeführt wird:
o ausgehend von einer Anfangstemperatur von 25 °C, Erhöhen der Temperatur, der das Verbundteil ausgesetzt wird, bis zu einer ersten Temperaturstufe von 140 °C mit einer Heizrate von 2 °C/min;
o ausgehend von dieser ersten Temperaturstufe, Erhöhen der Temperatur bis zu einer zweiten Temperaturstufe von 170 °C mit einer Heizrate von 0,1 °C/min;
o ausgehend von dieser zweiten Temperaturstufe, Erhöhen der Temperatur bis zu einer dritten Temperaturstufe von 200 °C mit einer Heizrate von 1 °C/min;
o ausgehend von dieser dritten Temperaturstufe, Erhöhen der Temperatur bis zu einer Endtemperatur von 380 °C mit einer Heizrate von 0,4 °C/min;
- Sintern bei einer Temperatur zwischen 1450 und 1500 °C zum Verdichten und Erhalten des Endteils aus Keramik.

## Claims

1. Polymeric binder for three-dimensional printing by extrusion of a composite element based on a ceramic compound and said polymeric binder,
**characterized in that** said binder consists of:
- PEG (polyethylene glycol) 4,000 g/mol in a proportion of between 25 and 50% (w/w);
- PEG (polyethylene glycol) 10,000 g/mol in a proportion of between 0 and 25% (w/w);
- a biosourced structural polymer chosen from PBSA (poly(butylene succinate co-adipate) and PBS (poly(butylene succinate)), said structural polymer being in a proportion of between 30 and 50% (w/w).

2. Polymeric binder for three-dimensional printing according to claim 1,
**characterized in that** it consists of:
- PEG (polyethylene glycol) 4,000 g/mol in a proportion of between 25 and 30% (w/w);
- PEG (polyethylene glycol) 10,000 g/mol in a proportion of between 20 and 25% (w/w);
- a biosourced structural polymer chosen from PBSA and PBS in a proportion equal to 50% (w/w).

3. Polymeric binder for three-dimensional printing according to claim 1 or claim 2, **characterized in that** it consists of:
- PEG (polyethylene glycol) 4,000 g/mol in a proportion equal to 25% (w/w);
- PEG (polyethylene glycol) 10,000 g/mol in a proportion equal to 25% (w/w);
- a biosourced structural polymer chosen from PBSA and PBS in a proportion equal to 50% (w/w).

4. Polymeric binder for three-dimensional printing according to any of claims 1 to 3, **characterized in that** said structural polymer is PBSA.

5. Composite formulation, for three-dimensional printing of a composite element by extrusion, **characterized in that** it comprises at least one ceramic compound, stearic acid and a polymeric binder according to any of claims 1 to 4, said formulation comprising:
- powder of a ceramic compound chosen from zirconia (ZrO₂), yttriated zirconia (YSZ), aluminum oxide (Al₂O₃), hydroxyapatite (HAP Ca₅(PO₄)₃(OH)), tricalcium phosphate (TCP) in a proportion of between 74 and 85% (w/w);
- said polymeric binder consisting of PEG 4000, PEG 10000 and a biosourced structural polymer chosen from PBSA and PBS, in a proportion of between 14 and 25% (w/w);
- stearic acid powder in a proportion of between 0.2 and 1% (w/w).

6. Composite formulation, for three-dimensional printing of a composite element by extrusion, according to claim 5, **characterized in that** it consists of:
- zirconia (ZrO₂) or yttriated zirconia (YSZ) powder in a proportion approximately equal to or equal to 80% (w/w);
- polymeric binder, consisting of 25% PEG 4000, 25% PEG 10000 and 50% PBSA or PBS, in a proportion approximately equal to or equal to 19.6% (w/w);
- stearic acid powder in a proportion approximately equal to or equal to 0.4% (w/w).

7. Method for preparing a composite formulation according to either of claims 5 or 6, and for obtaining composite granules from this formulation, said method being **characterized in that** it comprises, at least, the following steps:
- dissolving stearic acid in a volume V1 of diethyl ether with stirring to obtain a solution of dissolved stearic acid of a volume V1';
- adding ceramic powder and a volume V2 of diethyl ether to said stearic acid solution, with stirring, so that the total volume of liquid, equal to V1'+V2, is greater than the volume of powder;
- evaporating ether at room temperature in a fume hood to obtain stearic acid-coated ceramic powder particles;
- mixing coated ceramic powder particles and polymeric binder together dry in a mixer and then melted together in a twin-screw extruder at a temperature of the order of, or equal to, 110°C, and obtaining the composite formulation;
- extruding filaments from said composite formulation and grinding said filaments to obtain composite granules.

8. Composite granules based on the composite formulation according to claim 5 or claim 6, obtainable according to the method of the preceding claim and comprising:
- powder of a ceramic compound chosen from zirconia (ZrO₂), yttriated zirconia (YSZ), aluminum oxide (Al₂O₃), hydroxyapatite (HAP Ca₅(PO₄)₃(OH)), tricalcium phosphate (TCP) in a proportion of between 74 and 85% (w/w);
- the polymeric binder consisting of PEG 4000, PEG 10000 and PBSA or PBS in a proportion of between 14 and 25% (w/w);
- stearic acid powder in a proportion of between 0.2 and 1% (w/w).

9. Composite granules according to claim 8, **characterized in that** they have the following composition:
- zirconia (ZrO₂) or yttriated zirconia (YSZ) powder in a proportion approximately equal to or equal to 80% (w/w);
- polymeric binder, consisting of 25% PEG 4000, 25% PEG 10000 and 50% PBSA or PBS, in a proportion approximately equal to or equal to 19.6% (w/w);
- stearic acid powder in a proportion approximately equal to or equal to 0.4% (w/w).

10. Method for producing a ceramic part from composite granules according to claim 8 or claim 9, **characterized in that** it comprises the following steps:
- three-dimensional printing of a composite part from composite granules according to claim 8 or claim 9;
- applying thermal debinding to the composite part obtained in the previous step, the thermal debinding being carried out in temperature stages according to the following program:
∘ from an initial temperature of 25°C, increasing the temperature to which said composite part is subjected up to a first temperature stage of 140°C at a heating rate of 2°C/min;
∘ from this first temperature stage, increasing the temperature up to a second temperature stage of 170°C at a heating rate of 0.1°C/min;
o from this second temperature stage, increasing the temperature up to a third temperature stage of 200°C at a heating rate of 1°C/min;
∘ from this third temperature stage, increasing the temperature up to a final temperature of 380°C at a heating rate of 0.4°C/min;
- sintering at a temperature of between 1450 and 1500°C to consolidate and obtain the final ceramic part.
